Europäisches Patentamt

European Patent Office

Office européen des brevets

(19)

(11) Veröffentlichungsnummer : **0 195 945**
**B1**

## (12) EUROPÄISCHE PATENTSCHRIFT

(45) Veröffentlichungstag der Patentschrift :
09.08.89

(21) Anmeldenummer : 86102466.9

(22) Anmeldetag : 26.02.86

(51) Int. Cl.⁴ : **F 16 H 7/08**

(54) Kettenspanner.

(30) Priorität : 26.02.85 DE 3506770
08.07.85 DE 3524378

(43) Veröffentlichungstag der Anmeldung :
01.10.86 Patentblatt 86/40

(45) Bekanntmachung des Hinweises auf die Patenterteilung : 09.08.89 Patentblatt 89/32

(84) Benannte Vertragsstaaten :
DE FR GB IT

(56) Entgegenhaltungen :
CH-A- 494 907
DE-A- 2 934 604
FR-A- 1 399 934
FR-A- 2 350 518
US-A- 3 626 776

(73) Patentinhaber : Joh. Winklhofer & Söhne
Albert-Rosshaupter-Strasse 53
D-8000 München 70 (DE)

(72) Erfinder : Biedermann, Adam
Gröbenbachweg 41
D-8039 Puchheim (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

EP 0 195 945 B1

## Beschreibung

Die Erfindung betrifft einen Kettenspanner mit einem in einem Führungsgehäuse längs seiner Achse verschiebbaren Kolben und einer am Führungsgehäuse angelenkten Spannschiene, an deren dem Führungsgehäuse zugewandten Innenseite der Kolben mit einem Kolbenkopf andrückt entsprechend den Merkmalen, die im Oberbegriff von Anspruch 1 enthalten und aus der FR-A-23 50 518 bekannt sind.

Ein weiterer Kettenspanner ist z. B. aus DE-C-16 25 883 und DE-A 16 50 910 bekannt. Die Spannschiene wird vom Kolben gegen die zu spannende Kette bzw. Riemen oder dergl. gedrückt, um die Kette bzw. den Riemen oder dergl. auch bei Längung derselben unter vorgegebener Zugspannung zu halten. Aufgrund der großflächigen gegenseitigen Anlage von Spannschiene und Kette bzw. Riemen oder dergl. ergibt sich verringerter Verschleiß. Auch läßt sich durch Verwendung der Schiene bei vorgegebenem Kolben-Hub eine größere Längung der Kette bzw. des Riemens oder dergl. kompensieren. Bei diesen bekannten Kettenspannern liegt die Spannschiene mit ihrer durchgehend flachen Innenseite am gewölbten Kolbenkopf an. Es hat sich nun herausgestellt, daß während des Einsatzes die Spannschiene aufgrund entsprechender Vibrationen der Kette bzw. des Riemens oder dergl. in seitliche Schwingungen (quer zu Kolbenachse des an der Spannschiene anliegenden Kolbens) geraten kann, die erhöhten Verschleiß und ggf. Geräuschentwicklung zur Folge haben. Derartige Schwingungen kann auch die seitlich an der Spannschiene angebrachte, mit einer Verzahnung des Führungsgehäuses zusammenwirkende Rastklinke 3 gemäß DE-A 16 50 910 nicht verhindern.

Die Aufgabe der Erfindung liegt darin, bei einem Kettenspanner der eingangs genannten Art mit baulich einfachen Mitteln seitliche Schwingungen der Spannschiene zuverlässig zu unterbinden.

Diese Aufgabe wird entsprechend den im Kennzeichen von Anspruch 1 enthaltenen Merkmalen dadurch gelöst, daß der Kolbenkopf als Führungsvorsprung ausgebildet ist, und daß hierzu der Außenumfang des Kolbenkopfes wenigstens einseitig abgeflacht mit zur Spannschienen-Längsrichtung und zur Kolbenachse im wesentlichen paralleler Kolbenseitenfläche, welche an einer Nut-Seitenfläche der Spannschiene anliegt.

Die an ihrem einen Ende am Führungsgehäuse angelenkte Spannschiene wird also im Bereich des vom Gelenk relativ weit entfernten Kolbens von diesem gegen Querschwingungen gesichert, wobei die entsprechend orientierte Führungs-Nut das Entlanggleiten des Kolbenkopfes entlang der Führungsschienen-Innenseite bei der Ausfahr-Bewegung des Kolbens zuläßt. Führungs-Nut und Führungsvorsprung lassen sich einfach, z. B. durch Fräsen, herstellen.

Es ergibt sich eine Dreh-Sicherung des Kolbens bezüglich der Kolbenachse, die vor allem dann von Vorteil ist, wenn der zylindrische Kolben an seinem inneren Ende mit einer Abschrägung für die Druck-Ölzufuhr versehen ist und/oder wenn der Kolben mit einer einseitigen Zahnreihe für ein Rastgesperre gemäß der EP-A-0 106 325, insbesondere gemäß Fig. 48, versehen ist. Hiervon abgesehen schränkt die wenigstens einseitige Abflachung des Kolbenkopfes die mögliche Einbaulänge innerhalb des hohlen Kolbens für eine Vorspannfeder nicht ein, so daß eine günstige Federcharakteristik mit großer Federlänge erzielt werden kann.

Bevorzugt ist die Spannschiene in einer am Führungsgehäuse ausgebildeten Lagergabel schwenkgelagert, was erhöhte Biegesteifigkeit gegenüber einseitiger Befestigung ergibt.

Aus Kosten- und Gewichtsgründen ist die Spannschiene bevorzugt unter Einsatz von Kunststoff gebildet.

Kettenspanner mit in einem Ölzufuhr-Nippel eingebauten Rückschlag-Ventil sind an sich bekannt (DE-A 17 50 986). Bei der Montage wird ein zylindrischer Einsteckabschnitt des Ölzufuhr-Nippels in eine entsprechende Ölzufuhr-Öffnung eines Kettenspannerträger eingesteckt. Es hat sich nun herausgestellt, daß bei hohen Öl-Drücken, unterstützt durch während des Betriebes auftretende Vibrationen, ein Sichlockern des Ölzufuhr-Nippels im Führungsgehäuse auftreten kann, welches zu einer Undichtigkeit in diesem Bereich führt. Erfindungsgemäß wird dies dadurch verhindert, daß der Einsteckabschnitt wenigstens einen radialen Vorsprung zur Anlage an einer die Ölzufuhr-Öffnung umringenden Kettenspanner-Montagefläche des Kettenspannerträgers aufweist. Der Ölzufuhr-Nippel wird nach Montage des Kettenspanners am Kettenspannerträger gegen die Kettenspanner-Montagefläche gepreßt und auf diese Weise zwischen Führungsgehäuse und Kettenspannerträger eingespannt. Der Ölzufuhr-Nippel kann sich folglich nicht mehr lösen.

Der erfindungsgemäß ausgebildete Ölzufuhr-Nippel ist besonders kostengünstig herstellbar, wenn der wenigstens eine radiale Vorsprung von einem durchmesservergrößerten Umfangsbund des Einsteckabschnitts gebildet ist. Mit diesem Umfangsbund ist der Ölzufuhr-Nippel bei montiertem Kettenspanner zwischen Führungsgehäuse und Kettenspannerträger eingespannt.

Bevorzugt schließt der Umfangsbund bündig mit einer der Kettenspanner-Montagefläche gegenüberliegenden Führungsgehäuse-Seitenfläche ab. Liegen nach erfolgter Montage die Montagefläche sowie die Seitenfläche flächig aneinander an, so ist die gewünschte Einspannung des ÖlzufuhrNippels gewährleistet.

Der Ölzufuhr-Nippel ist bevorzugt in das Führungsgehäuse eingepreßt, so daß sich bei einfacher Montage eine Abdichtung zwischen Ölzufuhr-Nippel und Führungsgehäuse ergibt.

Die Erfindung betrifft auch einen Kettenspanner mit einem Spannbügel, an dessen Bügelaußenseite an einer Anlagefläche eine Gliederkette anliegt, welche mit wenigstens zwei sich in Kettenlängsrichtung erstreckenden, durch in Querrichtung verlaufende Bolzen und Hülsen miteinander verbundenen Laschenreihen jeweils aus in Kettenlängsrichtung gegenseitig überlappend versetzend und in Querrichtung unmittelbar nebeneinander angeordneten, miteinander gelenkig verbundenen Laschen gebildet ist.

Bei Kettenspannern mit am Hohlkolben unmittelbar befestigtem Spannschuh ist es bekannt (DE-C-17 75 273), in der an der Rollenkette anliegenden Anlagefläche des Spannschuhs eine einzelne Öl-Austrittsöffnung vorzusehen. Das austretende Schmieröl dient zum einen der Schmierung der Anlagefläche und damit der Verminderung des Reibungswiderstands zwischen Spannschuh und Rollenkette und zum anderen der Schmierung der Rollenkette selbst. Dementsprechend ist es aus der DE-C-10 80 371 bekannt, mit dem Hohlkolben starr verbundene, an den Laschenpaaren jeweils anliegende Andruckrollen mit Schmieröl zu versorgen. Schließlich zeigt die DE-C-25 25 352 einen Kettenspanner mit einer Öl-Austrittsdüse am Hohlkolben unterhalb des Spannerkopfes, welche die Rollenkette vor dem Auflaufen auf die Anlagefläche mit Schmieröl besprüht. Letztere Lösung ist auf einen Kettenspanner mit Spannbügel nicht ohne weiteres übertragbar, abgesehen von der nur teilweisen Ausnutzung der versprühten Schmierstoffe.

Bei einem Kettenspanner mit Spannbügel soll mit geringem baulichen Aufwand eine Schmieröl-Versorgung mit verbesserter Wirksamkeit bereitgestellt werden.

Dies wird dadurch erreicht, daß an der Bügelaußenseite in eine der Anzahl der Laschenreihen entsprechende Anzahl von Öl-Austrittsöffnungen vorgesehen sind, wobei jede Öl-Austrittsöffnung jeweils einer Laschenreihe gegenüberliegt. Die Anbringung der Öl-Austrittsöffnungen am Spannbügel bedarf keiner größeren baulichen Vorkehrungen. Der lichte Abstand zwischen den Öl-Austrittsöffnungen und der vorbeilaufenden Rollenkette kann derart gering gewählt werden, daß praktisch das gesamte Öl auf die Kette gelangt, die Kette jedoch nicht die Öl-Austrittsöffnungen berührt mit der Gefahr der Ablagerung von Schmutz oder Abriebstoffen, die zu einer Verstopfung der Öl-Austrittsöffnungen führen könnten. Bei der herkömmlichen Kettenschmierung mit Schmieröl-Zufuhr über eine einzige Öl-Austrittsöffnung hat sich gezeigt, daß zu einer zufriedenstellenden Kettenschmierung unverhältnismäßig viel Schmieröl eingesetzt werden muß. Es wurde erkannt, daß dies daran lag, daß das etwa in Breitenmitte auf die Kette gesprühte Öl nur unter Schwierigkeiten zu den eigentlichen Reibflächen gelangt, nämlich zwischen die Bolzen und die diese umgreifenden Hülsen. Bei der Erfindung dagegen wird das Öl unmittelbar zu den Laschenpaaren beidseits der Rollen geleitet, so daß das Öl aus dem zwischen Außen- und Innenlasche gebildeten Spalt unmittelbar zwischen Bolzen und Hülse gelangen kann. Da diese Öl-Zufuhr an beiden Seiten der Hülsen erfolgt, ergibt sich eine zuverlässige Kettenschmierung bei relativ geringem Schmieröl-Einsatz. Zudem werden diejenigen Teile der Gliederkette, die an der Anlagefläche anliegen, nämlich die Laschen, unmittelbar geschmiert, so daß sich reibungsarmer Kettenlauf am Spannbügel bei geringem Öl-Einsatz ergibt.

Bevorzugt sind die Öl-Zufuhröffnungen in einem Flächenbereich angeordnet, der der Gelenkplatte vor ihrem Erreichen der Anlagefläche gegenüberliegt, um reibungsarmen Lauf im gesamten Bereich der Anlagefläche zu gewährleisten, wenn auch Einsatzfälle denkbar sind, bei denen die Öl-Austrittsöffnungen im Bereich der Anlagefläche angeordnet sind, da auch dann eine zuverlässige Schmierung der Kettenbolzen und -hülsen gewährleistet ist.

Die Öl-Zufuhr zu den Öl-Austrittsöffnungen könnte über einen Schlauch oder über einen Hohlbolzen als Drehlagerstelle des Bügels am Kettenspannergehäuse erfolgen. Insbesondere bei mit Drucköl zur Ausschubkrafterhöhung und-/oder Schwingungsdämpfung beaufschlagtem Kettenspanner-Hohlkolben erweisen sich die Merkmale des Anspruchs 11 als besonders vorteilhaft. Es erübrigt sich eine eigene Öl-Zuführung, wozu lediglich der Verbindungs-Kanal im Spannbügel vorzusehen ist. Bevorzugt ist dieser Kanal als an der Innenseite des Spannbügels verlaufende Nut ausgebildet, was die Herstellungskosten verringert.

In Fällen relativ geringen Öl-Bedarfs kann diese Nut offen sein, so daß dann, bei entsprechender Orientierung des Bügels, das Öl von der Öl-Zufuhröffnung des Hohlkolbens zu den beiden Öl-Austrittsöffnungen schwerkraftbedingt (und/oder aufgrund entsprechender Kapillarkräfte) fließt. Bei größerem Schmieröl-Bedarf wird der Kanal gemäß Anspruch 12 jedoch bevorzugt als Druckkanal ausgebildet, damit das Öl unter dementsprechendem Druck den beiden Öl-Austrittsöffnungen zugeführt werden kann.

Um den Herstellungsaufwand für den Druckkanal zu reduzieren, werden die Maßnahmen des Anspruchs 13 vorgeschlagen.

Die Maßnahmen der Ansprüche 14 und 15 stellen eine relativ gute Abdichtung der einander gegenüberliegenden Öl-Zufuhröffnung des Hohlkolbens und der Öl-Eintrittsöffnung des Abdeckteils nach außen hin sicher, um die Öl-Verluste möglichst klein zu halten. Die Erweiterung der Öl-Eintrittsöffnung in Bügellängsrichtung stellt hierbei sicher, daß sich die beiden Öffnungen in sämtlichen möglichen Hohlkolben-Stellungen ausreichend überlappen.

Um die Schwächung des Bügels durch die Nut gering zu halten (insbesondere um ohne Schwierigkeiten einen Kunststoff-Bügel einsetzen zu können), wird eine Nut-Gestaltung gemäß Anspruch 16 vorgeschlagen.

Die Maßnahmen des Anspruchs 17 sorgen ohne weitere Maßnahmen für eine Fixierung des Abdeckteils am Bügel zusätzlich zu einer seitlichen Führung des Bügels am Hohlkolben.

Die Erfindung wird im folgenden an bevorzugten Ausführungsbeispielen an Hand der Zeichnung erläutert.

Es zeigt :

Fig. 1 eine Schemaansicht eines erfindungsgemäßen Kettenspanners zum Spannen einer umlaufenden Kette ;

Fig. 2 eine Unteransicht eines geringfügig abgewandelten Kettenspanners teilweise im Schnitt nach Linie II-II- in Fig. 4 ;

Fig. 3 einen Schnitt nach Linie III-III in den Figuren 2 und 4 ;

Fig. 4 eine Seitenansicht des Kettenspanners gemäß Figuren 2 und 3 ;

Fig. 5 eine vereinfachte Seitenansicht im Schnitt einer weiteren Ausführungsform des erfindungsgemäßen Kettenspanners samt angedeuteter Rollenketten-Schleife ;

Fig. 6 einen Teilschnitt nach Linie VI-VI in Fig. 5 ;

Fig. 7 einen Teilschnitt nach Linie VII-VII in Fig. 5 ohne Abdeckteil und

Fig. 8 einen Teilschnitt nach Linie VIII-VIII in Fig. 5.

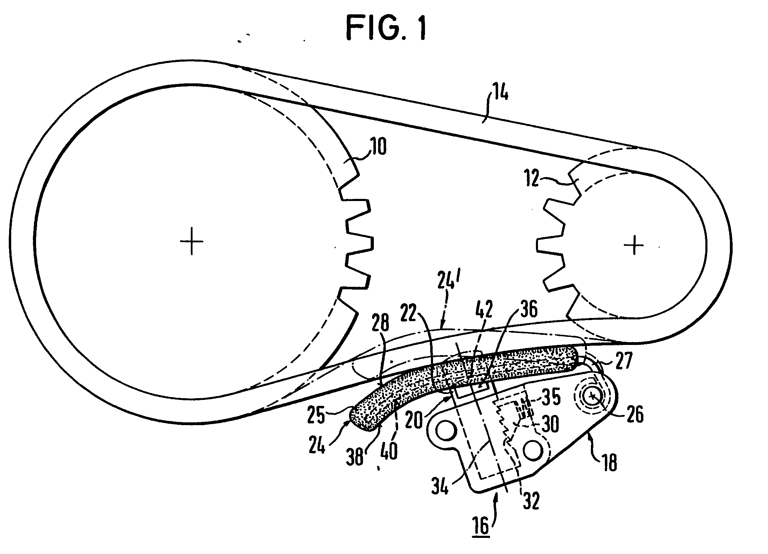

In Fig. 1 erkennt man eine über ein großes Zahnrad 10 sowie ein kleines Zahnrad 12 laufende endlose Kette 14, welche in einen der beiden freilaufenden Bereiche zwischen den Zahnrädern 10 und 12 mit Hilfe eines Kettenspanners 16 ständig gespannt wird. Ein in einem Führungsgehäuse 18 des Kettenspanners 16 axial verschiebbar geführter Kolben 20 drückt mit seinem Kolbenkopf 22 gegen eine Spannschiene 24, die wiederum an einem ihrer Enden am Führungsgehäuse 18 schwenkgelagert ist (Achse 26) und mit ihrer vom Kolben abgewandten Außenseite 28 gegen die Kette 14 drückt. Bei einer Längung der Kette 14 drückt der Kolben 20 die Spannschiene 24 dementsprechend vom Führungsgehäuse 18 weg (strich-punktierte Stellung 24' der Spannschiene 24 in Fig. 1). Der Kolben 20 wird durch eine nicht dargestellte Schraubendruckfeder aus dem Führungsgehäuse 18 herausgedrückt, ggf. unterstützt durch Öldruck. Ein Rastgesperre verhindert Einfahrbewegungen des Kolbens ab einer bestimmten geringfügigen Einfahr-Amplitude. Gemäß Fig. 48 der EP-A-0 106 325 greift hierzu ein in Fig. 1 der vorliegenden Anmeldung angedeuteter Sperriegel 30 in eine Sägezahnreihe 32, die sich an der entsprechenden Kolbenseite parallel zur Kolbenachse 34 erstreckt. Eine Vorspannfeder 35 drückt den Sperriegel 30 in Richtung auf die Zahnreihe 32. Bei einer Verdrehung des Kolbens 20 um die Kolbenachse 34 würde die Sperrwirkung aufgehoben werden, sobald die Zahnreihe 32 außer Eingriff mit dem Sperriegel 30 gerät. Diese unerwünschte Drehung wird dadurch verhindert, daß der Kolben beidseits abgeflacht ist mit zur Kolbenachse 34 und zur Spannschienen-Längsrichtung im wesentlichen parallelen Kolben-Seitenflächen 36. Eine an der Innenseite 38 der Spannschiene 24 ausgebildete Führungs-Nut 40 umgreift den Spannerkopf 22 derart, daß die zur Zeichenebene der Fig. 1 parallelen Nut-Seitenflächen an den Kolben-Seitenflächen 36 anliegen. Bei einem Ausfahren des Kolbens 20 gleitet die abgerundete Kolben-Stirnfläche 42 entlang des Nut-Bodens. Aufgrund der Einpassung des Kolbenkopfes 22 in die Nut ergibt sich zum einen die erwünschte Drehsperre für den Kolben 20 und zum anderen eine seitliche Führung für die Spannschiene 24, die nunmehr daran gehindert ist, seitliche Schwenkbewegungen (senkrecht zur Zeichenebene der Fig. 1) um ihr Schwenkgelenk (Achse 26) durchzuführen.

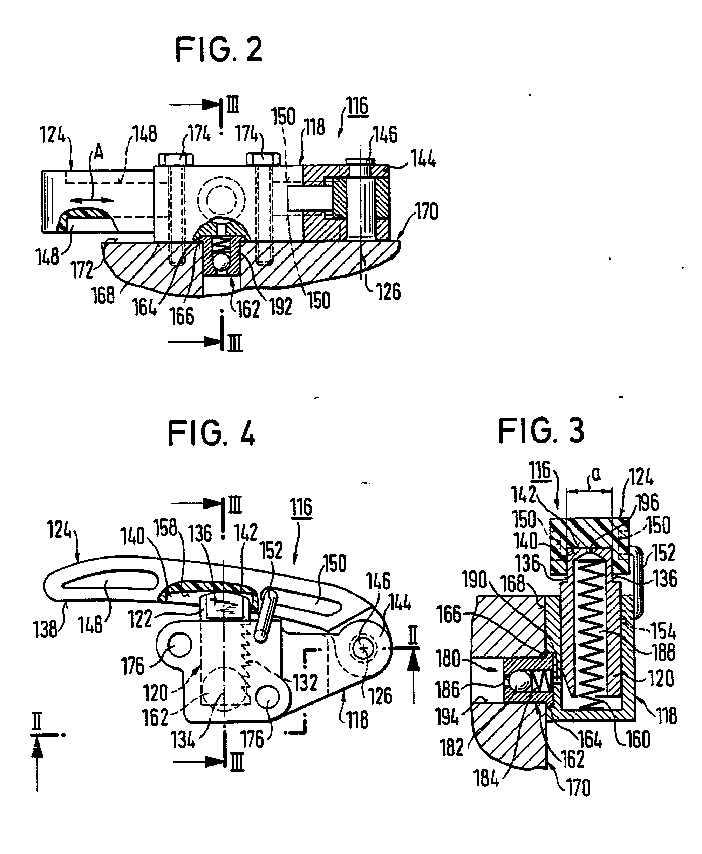

In den Figuren 2 bis 4 ist eine weitere Ausführungsform eines Kettenspanners näher dargestellt, wobei Bauelemente, die ihrer Funktion nach solchen in Fig. 1 entsprechen, mit denselben Bezugsziffern, jeweils vermehrt 100, versehen sind.

Der demzufolge mit 116 bezeichnete Kettenspanner weist eine einstückig aus Kunststoff geformte Spannschiene 124 auf, also im Gegensatz zum Spanner 16, bei welchem die Spannschiene 24 aus einem am Führungsgehäuse 18 angelenkten und bis auf den Gelenkbereich mit einer Kunststoffschicht 25 umspritzten Metallbügel 27 besteht.

Die Spannschiene 124 ist an ihrem in den Figuren 2 und 4 rechten Ende in einer Lagergabel 144 des Führungsgehäuses 118 mittels eines Niet-Lagerbolzens 146 mit Lagerachse 126 schwenkgelagert. Gemäß Fig. 4 ist an der Innenseite 138 der Spannschiene 124 die Führungs-Nut 140 ausgebildet, welche sich jedoch nur über denjenigen Teil der Spannschienen-Länge erstreckt, welcher vom Spannerkopf in den möglichen Ausfahrstellungen des Kolbens 120 überstrichen wird. Im übrigen Bereich ist die Spannschiene 124 bis auf seitliche Längsschlitze 148, 150 in Schienen-Längsrichtung A (Fig. 2) beidseits der Führungs-Nut 140 durchgehend massiv ausgebildet. Die Spannschiene 124 ist folglich bei geringem Materialeinsatz und dementsprechend geringem Gewicht mechanisch ausreichend stabil. Eine der beiden dem Schwenkgelenk (Achse 126) näher gelegenen seitlichen Längs-Nuten 150 kann zur Transportsicherung einen Seitenschenkel eines U-förmigen Transportsicherungsbügels 152 aufnehmen, dessen anderer Seitenschenkel in eine entsprechende Aufnahmebohrung 154 des Führungsgehäuses 118 einzusetzen ist (s. Figuren 3 und 4). Zweckmäßigerweise befindet sich der Kolben 120 dabei in seiner Einfahr-Endstellung.

Entsprechend der Ausführungsform in Fig. 1 ist auch bei derjenigen gemäß Figuren 2 bis 4 der Kolbenkopf 122 beidseits abgeflacht (Kolben-Seitenflächen 136 in den Figuren 3 und 4) in Anpassung an die Breite a der Führungs-Nut 140 in der Spannschiene 124. Die Kolbenstirnfläche 142 ist ebenso wie der Nut-Grund 158 leicht gewölbt, letzterer mit größerem Krümmungsradius, um ein reibungsarmes Entlanggleiten der Kolbenstirnfläche 142 am Nut-Grund 158 beim Ausfahren des Kolben 120 sicherzustellen. Eine in Fig. 3 erkennbare, in den hohlen zylindrischen Kolben 120 eingesetzte Vorspann-Spiralfeder 160 drückt den Kolben 120 nach außen und damit die Spannschiene 124 gegen die nicht dargestellte Kette, Riemen oder dergl. An seiner dem Schwenkgelenk (Achse 126) nächstgelegenen Seite ist der Kolben mit einer zur Kolbenachse 134 parallel verlaufenden Zahnreihe 132 versehen, in welche entsprechend Fig. 1 ein Sperrriegel (in Fig. 4 nicht dargestellt) rastend eingreift.

Wie die Figuren 2 und 3 zeigen, ist in das Führungsgehäuse 118 ein Ölzufuhr-Nippel 162 derart eingepaßt, insbesondere eingepreßt, daß ein durchmesservergrößerter Umfangsbund 164 des Ölzufuhr-Nippels mit seiner vom Führungsgehäuse 118 abgelegenen, kreisringförmigen Seite 166 bündig mit einer Führungsgehäuse-Seitenfläche 168 abschließt. Mit dieser Seitenfläche 168 liegt der Kettenspanner 116 nach erfolgter Montage an einem Kettenspanner-Träger 170 flächig an einer entsprechenden Kettenspanner-Montagefläche 172 desselben an. Die Befestigung des Führungsgehäuses 118 am Kettenspanner-Träger 170 erfolgt hierbei, unabhängig vom Ölzufuhr-Nippel 162, über zwei in Fig. 2 erkennbare Kopfschrauben 174, die, in Fig. 4 erkennbare Durchgangslöcher 176 durchsetzend, in den Kettenspanner-Träger 170 eingeschraubt sind.

Der Ölzufuhr-Nippel 162 beherbergt ein Rückschlag-Ventil 180, welches z. B. von einer Ventil-Kugel 182 gebildet ist, die von einer Vorspannfeder 184 gegen eine Eingangsöffnung 186 des Ölzufuhr-Nippels 162 gepreßt wird.

Um auch in der Einfahr-Endstellung des Kolbens den Ölzutritt in den Kolbeninnenraum 188 zu ermöglichen, ist der Kolben 120 an seinem inneren Ende im Bereich des Ölzufuhr-Nippels 162 abgeschrägt, so daß er die entsprechende innenseitige Nippelmündung 190 nicht verdeckt.

Bei der Montage des Kettenspanners 116 am Kettenspanner-Träger 170 wird der Ölzufuhr-Nippel 162 mit einem zylindrischen Einsteckabschnitt 192 in eine entsprechend angepaßte Ölzufuhr-Öffnung 194 des Kettenspanner-Trägers 170 eingesetzt. Nach dem Festschrauben der erwähnten Kopfschrauben 174 liegt sowohl die genannte ringförmige Seite 166 des Ölzufuhr-Nippels 162, wie auch die mit dieser bündigen Seitenfläche 168 des Führungsgehäuses, flächig an der Kettenspanner-Montagefläche 172 des Kettenspanner-Trägers 170 an. Es besteht daher keine Möglichkeit, daß sich der Ölzufuhr-Nippel 162, z. B. vibrationsbedingt und unter dem wirkenden Öldruck, am Führungsgehäuse 118 lockert mit der Folge von Undichtigkeiten. Im übrigen dient der Öldruck zum einen dazu, die Ausschubkraft des Kolbens 120 zu erhöhen und zum anderen zur Schmierung, wozu in der Stirnseite 142 des Kolbenkopfes 122 eine Ölabgabe-Öffnung 196 vorgesehen ist. Das Rückschlag-Ventil 180 reduziert und dämpft Einfahrschwingungen des Kolbens 120.

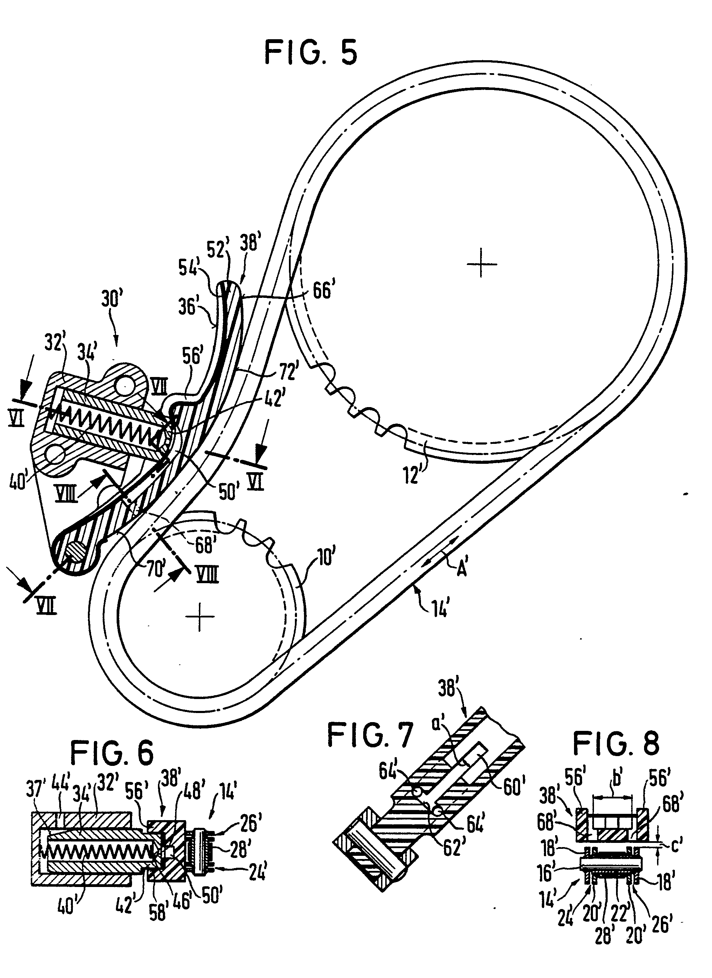

In Fig. 5 erkennt man eine über zwei Umlenkräder 10' und 12' in einer geschlossenen Schleife geführte Rollenkette 14' üblichen Aufbaus, also aus in Fig. 8 erkennbaren Kettenbolzen 16' an deren beiden Enden jeweils Außenlaschen 18' starr angebracht sind, wobei jeweils eine mit entsprechenden Innenlaschen 20' versehene Hülse 22' auf die Bolzen 16' aufgeschoben und zwischen die beiden Außenlaschen 18' eingesetzt ist. Die Laschen 18', 20' jeweils an einer Seite der Kette, d. h. an einem Ende der Bolzen 16' seien als Laschenreihe bezeichnet, und zwar die in Fig. 8 linke Laschenreihe mit 24' und die in Fig. 8 rechte mit 26'. Jede Laschenreihe besteht also aus in Kettenlängsrichtung A' gegenseitig überlappend versetzten und in Querrichtung unmittelbar nebeneinander angeordneten, miteinander verbundenen Laschen (im Wechsel Außenlasche 18' und Innenlasche 20').

Im Falle der dargestellten Rollenkette 14' sind auf die Hülsen 22' noch Rollen 28' aufgeschoben, die der Reibungsverminderung beim Umlauf um die Umlenkräder 10' und 12' dienen. Im Falle einer Hülsenkette entfallen diese Rollen 28'.

Die Erfindung ist auch auf Mehrfach-Ketten, insbesondere Doppel-Ketten, anwendbar, bei welchen mehr als zwei, durch Hülsen bzw. Bolzen miteinander verbundene Laschenreihen vorgesehen sind.

Ein allgemein mit 30' bezeichneter Kettenspanner sorgt für eine stete Vorspannung der Kette 14' unter Ausgleich einer etwaigen Kettenlängung.

Der Kettenspanner 30' besteht hierzu aus einem ortsfesten Gehäuse 32', in welchem ein Hohlkolben 34' verschiebbar gelagert ist. Der Hohlkolben 34' drückt gegen die Innenseite 36' eines länglichen, mit seinem einen Ende am Gehäuse 32' angelenkten Spannbügels 38'. Eine Vorspannfeder 40' innerhalb des Hohlkolbens 34', welche sich einerseits am außerhalb des Gehäuses 32' liegenden Kolbenende 42' und andererseits am Gehäuse 32' abstützt, spannt den Hohlkolben 34' in Richtung auf den Spannbügel 38' vor. Die Vorspannkraft der Feder 40' kann durch Öl-Druck unterstützt werden, welcher sich zwischen Hohlkolben und Gehäuse aufbauen kann. Man erkennt in Fig. 6 eine Öl-Zufuhröffnung 44' im Gehäuse 32' mit Verbindung zum Inneren des Hohlkolbens 34' (Anschrägung 37' am inneren Hohlkolbenende).

Unabhängig von einer möglichen Unterstützung der Vorspannfeder 40' dient das durch die Öffnung 44' dem Spanner 30' zugeführte Öl auch der Schmierung der Kette 14'. Hierzu ist im spannbügelseitigen Kolbenende 42' eine gedrosselte Öl-Austrittsöffnung 46' vorgesehen, die mit einer etwas größeren Öl-Eintrittsöffnung 48' des Spannbügels 38' überlappt, so daß Öl in einen Kanal 50' innerhalb des Spannbügels 38' eintreten kann.

Um den Kanal 50' ohne größeren Herstellungsaufwand innerhalb des Spannbügels 38' ausbilden zu können, ist der Spannbügel 38' zweiteilig ausgebildet, nämlich aus dem eigentlichen, insbesondere aus Kunststoff gefertigten Bügelteil 52' und einem Abdeckteil 54' in Form eines an der dem Hohlkolben 34' zugewandten Innenseite des Bügelteils 52' anliegenden Metallblechstreifens, dessen in Fig. 5 unteres Ende zur Verbesserung des Zusammenhalts um das am Gehäuse 32' angelenkte untere Ende des Bügelteils 52' herumgebogen ist. Wie die Figuren 5, 6 und 8 zeigen, verlaufen an der Bügelteil-Innenseite in Längsrichtung an beiden Rändern zwei in Richtung zum Gehäuse 32' abstehende Führungsstege 56', die das Abdeckteil seitlich einfassen und an denen jeweils eine abgeflachte Seitenfläche 58' des Hohlkolbens 34' seitlich anliegt, zur gegenseitigen seitlichen Führung von Spannbügel 38' und Hohlkolben 34'.

Der geschlossene Kanal 50' wird also von einer in Fig.7 erkennbaren, in Längsrichtung des Bügelteils 52' sich erstreckenden, im Querschnitt rechteckigen Nut 60' gebildet, deren Breite a' der entsprechenden Dimension der Öl-Eintrittsöffnung 46' entspricht. Die Nut 60' mündet über eine T-artige Nut-Verbreiterung 62' am in Fig. 5 unteren, gelenkseitigen Ende der Nut in zwei das Bügelteil 52' durchsetzenden Durchtrittslöchern 64', die an der Bügelaußenseite 66' zwei Öl-Austrittsöffnungen 68' bilden. Diese Öl-Austrittsöffnungen 68' liegen in einem Flächenbereich 70' der Bügelaußenseite 66', welcher der Rollenkette 14' vor ihrem Erreichen der Berührungs- oder Anlagefläche 72' an der Bügelaußenseite 66' gegenüberliegt. Die beiden Öl-Austrittsöffnungen 68' sind so in Querrichtung in Bezug auf die Kettenlängsrichtung A' auf einer Linie orientiert, daß sie jeweils einer der beiden Laschenreihen 24' und 26' gegenüberliegen, wie dies Fig. 8 zeigt. Der Abstand b' in Querrichtung zwischen den beiden Öl-Austrittsöffnungen 68' entspricht demzufolge dem Abstand der beiden Laschenreihen 24' und 26'. Der Abstand ist also derart festgelegt, daß das durch die Öl-Austrittsöffnungen 68' tretende Öl exakt in den Zwischenraum-Bereich zwischen Außen- und Innenlaschen 20' bzw. 18' der jeweiligen Laschenreihe 24' bzw. 26' gespritzt bzw. getröpfelt wird. Dies ergibt eine optimale Schmierung der Kette 14' (bestes Schmierergebnis bei geringstem Schmiermitteleinsatz), da dieser genannte Zwischenraum-Bereich in Höhe des jeweiligen Bolzens 16' unmittelbar verbunden ist mit dem zu schmierenden Bereich zwischen Hülse 22' und Bolzen 16'. Die Zugkraft der Kette wird ja von den Bolzen 16' auf die Hülsen 22' und umgekehrt übertragen. Von geringerer Bedeutung ist dagegen die Schmierung des Bereichs zwischen den Hülsen 22' und den Rollen 28', da zum einen lediglich im Bereich der Umlenkräder 10', 12', Kräfte zwischen diesen Teilen wirken und zum anderen die entstehenden Oberflächenbelastungen aufgrund des größeren Durchmessers entsprechend geringer sind. Im allgemeinen reicht das über die Innenlaschen 20' in den Bereich der Rollen 22' kriechende Öl aus für die Schmierung der Rollen 22'.

Während des Gebrauchs der erfindungsgemäßen Anordnung strömt also Öl über die Öffnung 44' in das Gehäuse 32' und in den Hohlkolben 34'. Durch die Öffnung 46' im Hohlkolben und die Öffnung 48' im Abdeckteil 54' gelangt das Öl in die als Druck-Öl-Kammer ausgebildete Nut (Kanal) 50'. Da der Hohlkolben 34' stirnseitig am entsprechend der Außenwölbung des Kolbenendes 42' gewölbten Abdeckteil 54' unter Vorspannung anliegt, ergibt sich zum einen eine Abdichtung zwischen Hohlkolben 34' und Abdeckteil 54' um die beiden sich gegenseitig überdeckenden Öffnungen 46' und 48' und zum anderen eine Abdichtung zwischen Abdeckteil 54' und Bügelteil 52'. Da die Breite a' der Nut etwa lediglich 1/3 der entsprechenden Breite des Abdeckteils 54' und damit des äußeren Endes des Hohlkolbens 34' beträgt, ist die Auflagefläche des Abdeckteils 54' beidseits der Nut 50' relativ groß, so daß die Gefahr einer Verformung des aus Kunststoff bestehenden Bügelteils 52' vernachlässigbar ist.

Das durch die Nut 60' den beiden Öl-Austrittsöffnungen 68' zugeführte Öl tropft oder spritzt (entsprechend dem gewählten Öl-Druck und dem gewählten Drossel-Querschnitt der Öffnung 46') auf die Rollenkette 14' jeweils auf eine der beiden Laschenreihen, so daß die fast unmittelbar anschließend auf die Anlagefläche 72' auflaufende Rollenkette 14' sowohl selbst gut geschmiert ist als auch aufgrund Schmierung der Laschen reibungs- und verschleißarm entlang der Anlagefläche 72' läuft. Der in Fig.3 erkennbare geringe Abstand c' zwischen den Öl-Austrittsöffnungen und der Kette, welcher etwa dem Öffnungsdurchmesser entspricht, stellt sicher, daß praktisch das gesamte abgegebene Öl auf die Kette gelangt ohne die Gefahr einer Verschmutzung oder gar Verstopfung der Öl-Austrittsöffnungen durch Schmutz oder Abriebstoffe der Kette.

## Patentansprüche

1. Kettenspanner (16 ; 116 ; 30') mit einem in einem Führungsgehäuse (18 ; 118 ; 32') längs seiner Achse verschiebbaren Kolben (20 ; 120 ; 34') und einer am Führungsgehäuse angelenkten Spannschiene (24 ; 124 ; 38'), an deren dem Führungsgehäuse zugewandten Innenseite (38 ; 138 ; -) der Kolben mit einem Kolbenkopf (22 ; 122, -) andrückt, wobei die Spannschiene (24 ; 124 ; 38') mit einer zur Spannschienen-Längsrichtung (A) im wesentlichen parallel verlaufenden Führungs-Nut (40 ; 140, -) ausgebildet ist, in welche ein Führungsvorsprung eingreift, dadurch gekennzeichnet, daß der Kolbenkopf als Führungsvorsprung ausgebildet ist, und daß hierzu der Außenumfang des Kolbenkopfes wenigstens einseitig abgeflacht ist mit zur Spannschienen-Längsrichtung (A) und zur Kolbenachse (34 ; 134, -) im wesentlichen paralleler Kolbenseitenfläche (36 ; 136 ; 58'), welche an einer Nut-Seitenfläche der Spannschiene (24 ; 124 ; Führungssteg 56') anliegt.

2. Kettenspanner nach Anspruch 1 dadurch gekennzeichnet, daß das Schwenklager zwischen Spannschiene (24 ; 124) und Führungsgehäuse (18 ; 118) eine am Führungsgehäuse (18 ; 118) oder an der Spannschiene ausgebildete Lagergabel (144) umfaßt.

3. Kettenspanner nach einem der vorhergehenden Ansprüche, dadurch gekennzeichnet, daß die Spannschiene (24 ; 124) unter Einsatzion Kunststoff gebildet ist.

4. Kettenspanner nach einem der Ansprüche 1 bis 3, gekennzeichnet durch einen in das Führungsgehäuse eingesetzten, ggf. ein Rückschlag-Ventil (180) aufnehmenden und and sich bekannten Ölzufuhr-Nippel (162), welcher einen ggf. zylindrischen Einsteckabschnitt (192) zum Einstecken in eine Ölzufuhröffnung (194) eines Kettenspanner-Trägers aufweist, wobei der Einsteckabschnitt wenigstens einen radialen Vorsprung zur Anlage an einer die Ölzufuhröffnung (194) umringenden Kettenspanner-Montagefläche (172) des Kettenspanner-Trägers (170) aufweist. (Fig. 2, 3)

5. Kettenspanner nach Anspruch 4, dadurch gekennzeichnet, daß der wenigstens eine radiale Vorsprung von einem durchmesservergrößerten Umfangsbund (164) des Einsteckabschnitts gebildet ist.

6. Kettenspanner nach Anspruch 5, dadurch gekennzeichnet, daß der Umfangsbund (164) bündig mit einer der Kettenspanner-Montagefläche (172) gegenüberliegenden Führungsgehäuse-Seitenfläche (168) abschließt.

7. Kettenspanner nach einem der Ansprüche 4 bis 6. dadurch gekennzeichnet, daß der Ölzufuhr-Nippel (162) in das Führungsgehäuse (118) eingepreßt ist.

8. Kettenspanner nach einem der vorhergehenden Ansprüche, gekennzeichnet durch einen das Führungsgehäuse (118) mit der Spannschiene (124), vorzugsweise in einer Einfahr-Endstellung des Kolbens (120),verbindenden Transportsicherungsbügel (152).

9. Kettenspanner mit einem Spannbügel, an dessen Bügelaußenseite (661) an einer Anlagefläche (721) eine Gliederkette anliegt, welche mit wenigstens zwei sich in Kettenlängsrichtung erstreckenden, durch in Querrichtung verlaufende Bolzen und Hülsen miteinander verbundenen Laschenreihen (24', 26') jeweils aus in Kettenlängsrichtung gegenseitig überlappend versetzend und in Querrichtung unmittelbar nebeneinander angeordneten, miteinander gelenkig verbundenen Laschen gebildet ist, nach einem der vorhergehenden Ansprüche, dadurch gekennzeichnet, daß an der Bügelaußenseite (66') eine der Anzahl der Laschenreihen (24, 26') entsprechende Anzahl von Öl-Austrittsöffnungen (68') vorgesehen sind, wobei jede Öl-Austrittsöffnung (68') jeweils einer Laschenreihe (24', 26') gegenüberliegt. (Fig. 5-8).

10. Kettenspanner nach Anspruch 9, dadurch gekennzeichnet, daß die Öl-Austrittsöffnungen (68') in einem Flächenbereich (70') des Spannbugels (38') angeordnet sind, der der Gelenkkette (14') vor ihrem Erreichen der Anlagefläche (72') gegenüberliegt.

11. Kettenspanner nach Anspruch 9 oder 10, dadurch gekennzeichnet, daß bei einer Öl-Zufuhr durch den den Spannbügel (38') gegen die Gelenkkette (14') spannenden Kolben, der als Hohlkolben (34') ausgebildet ist, ein vorzugsweise nutförmiger Kanal (50') im Spannbügel (38') vorgesehen ist, welcher eine Öl-Zufuhröffnung (46') im spannbügelseitigen Kolbenende (42') mit den Öl-Austrittsöffnungen (68') verbindet.

12. Kettenspanner nach Anspruch 11, dadurch gekennzeichnet, daß der Kanal (50') als Druckkanal ausgebildet ist.

13. Kettenspanner nach Anspruch 12, gekennzeichnet durch ein Abdeckteil (54'), vorzugsweise in Form eines Metall-Blechstreifens, zur Abdeckung der auf der Bügelinnenseite angeordneten Nut (60'), welches im Bereich der Öl-Zufuhröffnung (46') des Hohlkolbens (34') mit einer vorzugsweise in Bügellängsrichtung erweiterten Öl-Eintrittsöffnung (48') in die Nut (60') versehen ist.

14. Kettenspanner nach Anspruch 13, dadurch gekennzeichnet, daß der Hohlkolben (34') stirnseitig am Abdeckteil (54') anliegt.

15. Kettenspanner nach Anspruch 14, dadurch gekennzeichnet, daß das Abdeckteil (54') entsprechend dem spannbügelseitigen Kolbenende (42') gewölbt ausgebildet ist.

16. Kettenspanner nach einem der Ansprüche 13 bis 15, dadurch gekennzeichnet daß die Nutbreite (a') im Bereich der Öl-Eintrittsöffnung (48') im wesentlichen der gleich orientierten Breite der Öl-Eintrittsöffnung (48') entspricht und erst im Bereich der wenigstens zwei Öl-Austrittsöffnungen (68') sich entsprechend verbreitert.

17. Kettenspanner nach einem der Ansprüche 13 bis 16, dadurch gekennzeichnet, daß an der Bügelinnenseite (36') in Bügellängsrichtung verlaufende Führungsstege (56') angeordnet sind, die beidseits des Hohlkolbens (34') an diesem anliegen und zwischen die das Abdeckteil (54') eingesetzt ist.

## Claims

1. Chain tensioner (16 ; 116 ; 30'), comprising a piston (20 ; 120 ;, 34') displaceable in a guide housing (18 ; 118 ; 32') along its axis and a tensioning bar (24 ; 124 ; 38') articulated to the guide housing, against the inner face (38 ; 138 ; -) of which bar, facing towards the guide housing, the piston bears with a piston head (22 ; 122,-), the tensioning bar (24 ; 124 ; 38') being constructed with a guide groove (40 ; 140 ; -) extending substantially parallel to the tensioning bar longitudinal direction (A), into which groove a guide projection engages, characterized in that the piston head is constructed as guide projection and that for this purpose the external periphery of the piston head is flattened at least on one side with a piston lateral surface (36 ; 136 ; 58') substantially parallel to the tensioning bar longitudinal direction (A) and to the piston axis (34 ; 134 ; -), which lateral surface bears against a lateral surface of the groove of the tensioning bar (24 ; 124 ; guide rib 56').

2. Chain tensioner according to Claim 1, characterized in that the pivot bearing between tensioning bar (24 ; 124) and guide housing (18 ; 118) comprises a bearing fork (144) formed on the guide housing (18 ; 118) or on the tensioning bar.

3. Chain tensioner according to one of the preceding Claims, characterized in that the tensioning bar (24 ; 124) is constructed with the use of plastics material.

7

4. Chain tensioner according to one of Claims 1 to 3, characterized by an oil feed nipple (162), itself known, inserted into the guide housing and possibly seating a non-return valve (180), which (oil feed nipple) comprises a possibly cylindrical insertion portion (192) for insertion into an oil feed opening (194) of a chain tensioner support, the insertion portion comprising at least one radial projection for bearing against a chain tensioner mounting surface (172) of the chain tensioner support (170), surrounding the oil feed opening (194) (Fig. 2, 3).

5. Chain tensioner according to Claim 4, characterized in that the at least one radial projection is formed of a peripheral flange (164) of the insertion portion which increases its diameter.

6. Chain tensioner according to Claim 5, characterized in that the peripheral flange (164) lies flush with a guide housing lateral surface (168), opposite a mounting surface (172) for the chain tensioner.

7. Chain tensioner according to one of Claims 4 to 6, characterized in that the oil feed nipple (162) is pressed into the guide housing (118).

8. Chain tensioner according to one of the preceding Claims, characterized by a transport securing clip (152), connecting the guide housing (118) with the tensioning bar (124), preferably in a retracted limiting position of the piston, (120).

9. Chain tensioner comprising a tensioning stirrup, against the outer surface (66') of which stirrup a link chain bears at a bearing surface (72'), which link chain is formed with at least two rows (24', 26') of link side bars, extending longitudinally of the chain and connected to each other by pins and sleeves extending transversely, each row of side bars consisting of side bars articulated to one another, offset and mutually overlapping longitudinally of the chain and immediately adjacent to one another in the transverse direction, according to one of the preceding Claims, characterized in that, on the outer face (66') of the stirrup, a number of oil outlet openings (68') corresponding to the number of side bar rows (24', 26') is provided, each oil outlet opening (68') being situated opposite one row of side bars (24', 26') (Fig. 5-8).

10. Chain tensioner according to Claim 9, characterized in that the oil outlet openings (68') are disposed in a surface region (70') of the tensioning stirrup (38') which is opposite the articulated chain (14') before it reaches the bearing surface (72').

11. Chain tensioner according to Claim 9 or 10, characterized in that, where the oil feed is through the piston which stresses the tensioning stirrup (38') against the articulated chain (14'), which piston is constructed as a hollow piston (34'), a preferably grooved-shaped duct (50') is provided in the tensioning stirrup (38'), which duct connects an oil feed opening (46') in the piston end (42') nearest the tensioning stirrup with the oil outlet openings (68').

12. Chain tensioner according to Claim 11 characterized in that the duct (50') is constructed as a pressure duct.

13. Chain tensioner according to Claim 12, characterized by a cover piece (54'), preferably in the form of a metal strip, for covering the groove (60') disposed on the inside of the stirrup, which (cover piece) is provided, in the region of the oil feed opening (46') of the hollow piston (34'), with an oil inlet opening (48'), preferably widened in the longitudinal direction of the stirrup, and leading 10 into the groove (60').

14. Chain tensioner according to Claim 13, characterized in that the hollow piston (34') bears at its end against the cover piece (54').

15. Chain tensioner according to Claim 14, characterized in that the cover piece (54') is shaped curved to correspond to the piston end (42') nearest the tensioning stirrup.

16. Chain tensioner according to one of Claims 13 to 15, characterized in that the groove width (a') in the region of the oil inlet opening (48') is substantially equal to the width in the same direction of the oil inlet opening (48'), and only widens out correspondingly in the region of the at least two oil outlet openings (68').

17. Chain tensioner according to one of Claims 13 to 16, characterized in that guide ribs (56') are disposed on the inner face (36') of the stirrup in the longitudinal direction of the stirrup, which guide ribs bear against the hollow piston (34') on both sides and between which the cover piece (54') is inserted.

## Revendications

1. Tendeur de chaîne (16 ; 116 ; 30') avec un piston (20 ; 120 ; 34') pouvant coulisser le long de son axe dans un carter de guidage (18 ; 118 ; 32') et un patin tendeur (24 ; 124 ; 38') articulé au carter de guidage, sur le côté intérieur (38 ; 138 ; -), tourné vers le carter de guidage, de laquelle le piston appuie par une tête de piston (22 ; 122 ; -), le patin tendeur (24 ; 124 ; 38') étant conformé avec une rainure de guidage (40 ; 140 ; -) s'étendant sensiblement parallèlement au sens longitudinal (A) du patin, rainure dans laquelle s'engage une saillie de guidage, caractérisé en ce que la tête de piston est conformée en saillie de guidage, et en ce qu'à cet effet, la périphérie extérieure de la tête de piston est aplatie au moins d'un côté, avec une face latérale de piston (26 ; 136 ; 58') sensiblement parallèle au sens longitudinal (A) du patin tendeur et à l'axe du piston (34 ; 134 ; -), face qui s'applique contre une face latérale de la rainure du patin tendeur (24, ; 124 ; nervure de guidage 56').

2. Tendeur de chaîne selon la revendication 1, caractérisé en ce que le palier pivotant entre le patin tendeur (24 ; 124) et le carter de guidage (18 ; 118) comprend une fourchette de palier (144) formée sur le carter de guidage (18 ; 118) ou sur le patin tendeur.

3. Tendeur de chaîne selon l'une des revendications précédentes, caractérisé en ce que le patin tendeur (24 ; 124) est formé en utilisant de la matière plastique.

4. Tendeur de chaîne selon l'une des revendications 1 à 3, caractérisé par un graisseur d'apport d'huile (162) connu en soi, incorporé dans le carter de guidage et recevant éventuellement un clapet antiretour (180), qui présente une partie emboîtable éventuellement cylindrique (192) à emboîter dans une ouverture d'apport d'huile (194) d'un support de tendeur de chaîne, la partie emboîtable présentant au moins une saillie radiale pour s'appliquer contre une face de montage de tendeur de chaîne (172) du support de tendeur de chaîne (170) qui entoure l'ouverture d'apport d'huile (194) (Figures 2, 3).

5. Tendeur de chaîne selon la revendication 4, caractérisé en ce que la ou les saillies radiales sont formées par un collet périphérique (164), de diamètre agrandi, de la partie emboîtable.

6. Tendeur de chaîne selon la revendication 5, caractérisé en ce que le collet périphérique (164) se termine en affleurement avec une face latérale du carter de guidage (168) qui est située en regard de la face de montage du tendeur de chaîne (172).

7. Tendeur de chaîne selon l'une des revendications 4 à 6, caractérisé en ce que le graisseur d'apport d'huile (162) est enfoncé par pression dans le carter de guidage (118).

8. Tendeur de chaîne selon l'une des revendications précédentes, caractérisé par un étrier de blocage de transport (152) assemblant le carter de guidage (118) au patin tendeur (124), de préférence dans une position finale rentrée du piston (120).

9. Tendeur de chaîne avec un étrier tendeur contre le côté extérieur (66') duquel s'applique, sur une face d'appui (72'), une chaîne à maillons, qui est formée par au moins deux rangées de maillons (24, 26') s'étendant dans le sens longitudinal de la chaîne et assemblées entre elles par des goujons et des douilles s'étendant dans le sens transversal, chaque rangée étant constituée de maillons articulés entre eux qui sont disposés directement les uns a côté des autres dans le sens transversal et décalés dans le sens longitudinal de la chaîne en se chevauchant les uns les autres, selon l'une des revendications précédentes caractérisé en ce qu'il est prévu, sur le côté extérieur (66') de l'étrier, un nombre d'ouvertures de sortie d'huile (68') correspondant au nombre de rangées de maillons (24', 26'), chaque ouverture de sortie d'huile (68') étant en vis-à-vis d'une rangée respective de maillons (24', 26') (Figures 5 à 8).

10. Tendeur de chaîne selon la revendication 9, caractérisé en ce que les ouvertures de sortie d'huile (68') sont disposées dans une région de surface (70') de l'étrier tendeur (38') qui est en vis-à-vis de la chaîne articulée (14') avant que cette dernière atteigne la face d'application (72').

11. Tendeur de chaîne selon la revendication 9 ou 10, caractérisé en ce que, dans le cas d'un apport d'huile par le piston tendant l'étrier tendeur (38') contre la chaîne articulée (14'), piston qui est conformé en piston creux (34'), il est prévu dans l'étrier tendeur (38') un canal de préférence en forme de rainure (50'), qui relie aux ouvertures de sortie d'huile (68') une ouverture d'apport d'huile (46') pratiquée dans l'extrémité du piston (42') du côté de l'étrier tendeur.

12. Tendeur de chaîne selon la revendication 11, caracterisé en ce que le canal (50') est conformé en canal sous pression.

13. Tendeur de chaîne selon la revendication 12, caracterisé par un élément de recouvrement (54'), de préférence sous la forme d'une bande de tôle métallique, pour recouvrir la rainure (60') située sur le côté intérieur de l'étrier, élément qui est pourvu, dans la région de l'ouverture d'apport d'huile (46') du piston creux (34'), d'une ouverture d'entrée d'huile (48') dans la rainure (60'), ouverture qui est de préférence élargie dans le sens longitudinal de l'étrier.

14. Tendeur de chaîne selon la revendication 13, caractérisé en ce que le piston creux (34') s'applique du côté frontal contre l'élément de recouvrement (54').

15. Tendeur de chaîne selon la revendication 14, caractérisé en ce que l'élément de recouvrement (54') est de conformation cintrée, en correspondance avec l'extrémité du piston (42') du côté de l'étrier tendeur.

16. Tendeur de chaîne selon l'une des revendications 13 à 15, caractérisé en ce que la largeur (a') de la rainure, dans la région de l'ouverture d'entrée d'huile (48'), est sensiblement égale à la largeur de même orientation de l'ouverture d'entrée d'huile (48'), et ne commence à s'élargir d'une manière correspondante que dans la région des au moins deux ouvertures de sortie d'huile (68').

17. Tendeur de chaîne selon l'une des revendications 13 à 16, caractérisé en ce que des nervures de guidage (56'), s'étendant dans le sens longitudinal de l'étrier, sont prévues sur le côté intérieur (36') de l'étrier, nervures qui s'appliquent des deux côtés du piston creux (34') contre ce dernier, et entre lesquelles est inséré l'élément de recouvrement (54').

# FIG. 1

EP 0 195 945 B1

# FIG. 2

# FIG. 4

# FIG. 3

# FIG. 5

# FIG. 6

# FIG. 7

# FIG. 8